# EUROPÄISCHE PATENTANMELDUNG

(11) **EP 0 968 861 A2**
(43) Veröffentlichungstag der Anmeldung: **05.01.2000**
(21) Anmeldenummer: 99112298.7
(22) Anmeldetag: 26.06.1999
(51) Int. Cl.: B60J 1/00

(54) **Notausstiegsfenster eines Fahrzeuges mit Fensterglasscheibe**

(30) Priorität: 03.07.1998 DE 19829737
(71) Anmelder: HÜBNER Gummi- und Kunststoff GmbH, D-34123 Kassel (DE)
(72) Erfinder: Mosaner, Olaf, 34130 Kassel (DE)
(74) Vertreter: WALTHER, WALTHER & HINZ Patentanwälte

(57) **Zusammenfassung**

Notausstiegsfenster eines Fahrzeuges mit einer Fensterglasscheibe (1) und einem Fenstereinfaßprofil (10), wobei das Fenstereinfaßprofil (10) durch den Fensterausschnitt in der Wandung (20) des Fahrzeuges gehalten ist, wobei das Fenstereinfaßprofil (10) eine Aussparung (14) zur Aufnahme der Fensterglasscheibe (1) aufweist, wobei das Fenstereinfaßprofil (10) beabstandet zur Stirnseite der Fensterglasscheibe (1) eine Öffnung (17) zur lösbaren Aufnahme eines ersten Spreizgliedes (30) aufweist, wobei dem Spreizglied (30) gegenüberliegend in dem Fenstereinfaßprofil (10) ein zweites, weiteres Spreizglied angeordnet ist, wobei der Fensterausschnitt des Fahrzeuges eine hakenförmige Fenstereinfaßprofilverankerung (120) aufweist, wobei das hakenförmige Ende der Verankerung in das Fenstereinfaßprofil (10) eingreift und wobei das hakenförmige Ende der Verankerung (120) im Einbauzustand vertikal beabstandet zu dem weiteren, zweiten Spreizglied (60) in dem Fenstereinfaßprofil einliegt.

## Beschreibung

Die Erfindung betrifft ein Notausstiegsfenster eines Fahrzeuges mit einer Fensterglasscheibe und einem Fenstereinfaßprofil, wobei das Fenstereinfaßprofil durch den Fensterausschnitt in der Wandung des Fahrzeuges gehalten ist, wobei das Fenstereinfaßprofil eine Aussparung zur Aufnahme der Fensterglasscheibe aufweist, wobei das Fenstereinfaßprofil beabstandet zur Stirnseite der Fensterglasscheibe eine Öffnung zur lösbaren Aufnahme eines ersten Spreizgliedes aufweist, wobei dem Spreizglied gegenüberliegend in dem Fenstereinfaßprofil ein zweites, weiteres Spreizglied angeordnet ist.

Ein sogenanntes Notausstiegsfenster ist beispielsweise aus der FR 26 84 051 bekannt. Hierbei ist ein sehr aufwendig geformtes Fenstereinfaßprofil vorgesehen, das in einer eine Dichtlippe bildenden Teil gelagert ist, wobei zum Lösen der Fensterglasscheibe dieses Teil nach außen weggeklappt werden kann. Nachteilig hierbei ist ebenfalls der erhebliche Kraftaufwand, der erforderlich ist, um dieses Teil des Fenstereinfaßprofiles nach außen wegzuklappen, da während des Klappvorganges das entsprechende Teil des Fenstereinfaßprofiles eine kreisbogenförmige Bewegung durchführt, die dafür sorgt, daß bei diesem kreisbogenförmigen Bewegungsablauf im Scheitelpunkt die Fensterglasscheibe an die gegenüberliegende Dichtung gepreßt wird.

Ein Notausstiegsfenster der eingangs genannten Art ist aus der FR 23 41 726 bekannt. Hierbei zeigt das Fenstereinfaßprofil eine Nut zur Aufnahme der Fensterglasscheibe, wobei zu beiden Seiten des Fenstereinfaßprofiles im Fenstereinfaßprofil Spreizkörper vorgesehen sind, die in einer kanalähnlichen Öffnung lagern. Zur Herausnahme der Fensterglasscheibe sind nun zu beiden Seiten der Fensterglasscheibe Hebel vorgesehen, die unter die Dichtlippen des Fenstereinfaßprofiles greifen. Durch Abreißen der Lippen unterhalb der Spreizkörper sollen die Spreizkörper abfallen mit der Folge, daß die Scheibe dann aus dem Fenstereinfaßprofil entfernt werden kann. Die Kettenmoleküle des Gummis des Fenstereinfaßprofils sind jedoch nicht gleichmäßig in eine Richtung ausgerichtet; insofern ist ein glattes Abreißen der Lippen unwahrscheinlich. Vielmehr ist wahrscheinlich, daß die entsprechende Lippe so abreißt, daß das Spreizglied gerade nicht aus dem Profilkörper fällt, so daß auch die Scheibe nicht herausgedrückt werden kann. Nachteilig hierbei ist auch, daß die Griffe fest am Fenstereinfaßprofil montiert sind. Das heißt, daß hierdurch dem Vandalismus insofern Vorschub geleistet wird, als jeder eine derartige Fensterglasscheibe aus ihrer Dichtung herausnehmen könnte.

Der Erfindung liegt daher die Aufgabe zugrunde, ein Notaussteigsfenster der eingangs genannten Art bereitzustellen, das einfach in der Handhabung ist, preiswert in der Herstellung, dennoch im Gefahrenfall ein sicheres Herausnehmen der Fensterglasscheibe zu beiden Seiten ermöglicht, ohne dem Vandalismus Vorschub zu leisten.

Die Aufgabe wird erfindungsgemäß dadurch gelöst, daß der Fensterausschnitt des Fahrzeugs eine hakenförmige Fenstereinfaßprofilverankerung aufweist, wobei das hakenförmige Ende der Verankerung in das Fenstereinfaßprofil eingreift, und wobei das hakenförmige Ende der Verankerung im Einbauzustand vertikal beabstandet zu dem zweiten Spreizglied in dem Fenstereinfaßprofil einliegt. Hieraus wird deutlich, daß die Fensterglasscheibe zu beiden Seiten des Fahrzeuges, d. h. sowohl nach innen als auch nach außen aus dem Fenstereinfaßprofil entfernt werden kann. Im Einzelnen ist vorgesehen, daß das eine Spreizglied umlaufend in der ebenfalls umlaufend im Fenstereinfaßprofil angeordneten kanalartigen Öffnung herausnehmbar bzw. lösbar einliegt. Gleiches gilt für das zweite Spreizglied, das ebenfalls umlaufend in einer umlaufend in dem Fenstereinfaßprofil angeordneten kanalartigen Öffnung lösbar und damit herausnehmbar einliegt. Hieraus wird deutlich, daß dann, wenn das jeweilige Spreizglied aus seiner Öffnung herausgenommen ist, das Fenstereinfaßprofil an der entsprechenden Stelle an Spannung verliert, und somit die Fensterglasscheibe herausgestoßen werden kann. In Bezug auf das eine erste Spreizglied, das von außen in dem Fenstereinfaßprofil einliegt, wird hierbei die Fensterglasscheibe als solche freigegeben. In Bezug auf das andere, fahrzeuginnenseitig liegende zweite Spreizglied wird erreicht, daß nach Entfernung dieses zweiten Spreizgliedes das hakenförmige Ende der Fenstereinfaßprofilverankerung durch das Fenstereinfaßprofil freigegeben wird, mit der Folge, das die Fensterglasscheibe samt Fenstereinfaßprofil aus der Fensteröffnung des Wagens herausgedrückt werden kann.

Vorteilhaft ist vorgesehen, um die Handhabung im Gefahrenfalle zu erleichtern, daß das jeweilige Spreizglied ein griffartiges Element aufweist. Hierbei ist das griffartige Element, das an dem einen ersten Spreizglied angeordnet ist, ausklappbar im Sinne von ausschwenkbar, um im Gefahrenfalle das jeweilige Spreizglied leichter aus der kanalartigen Öffnung ziehen zu können. Das heißt, daß das griffartige Elemente zunächst plan dem Fenstereinfaßprofil anliegt, so daß im Normalfall kein Luftwiderstand durch das griffartige Element erfolgt. Das griffartige Element am zweiten, innenliegenden Spreizglied weist einen Griff auf, der allerdings unter einer Verkleidung liegt und hierdurch abgedeckt ist. Es ist festzuhalten, daß dann, wenn durch das griffartige Element das jeweilige Spreizglied um ein bestimmtes Maß aus seiner kanalartigen Öffnung herausgezogen worden ist, das Spreizglied selbst erfaßbar ist, und somit selbst als Griff dient, um das Spreizglied selbst vollständig aus der kanalartigen Öffnung zu ziehen.

Nach einem vorteilhaften Merkmal ist vorgesehen, daß mindestens das eine griffartige Element durch eine Verriegelung gesichert ist, um einen Mißbrauch bei der Betätigung des griffartigen Elementes auszuschließen. Das bedeutet, daß erst im Falle eines Unfalles quasi zentral die Verriegelung entriegelt wird, mit der Folge, daß erst dann der an dem ersten, außenliegenden Spreizglied angeordnete Griff betätigbar ist. Der Griff des innenliegenden Spreizgliedes ist gegen Vandalismus durch die Verkleidung gesichert, die im Gefahrfall entfernt werden muß.

Nach einem weiteren Merkmal ist vorgesehen, daß der Grund der Aussparung schräg verlaufend zur Außenseite des Fahrzeugs zur Mitte der Fensterglasscheibe hin ansteigend ausgebildet ist. Korrespondierend hierzu weist die Fensterglasscheibe eine schräge Stirnfläche auf. Bei Verwendung einer Doppelglasscheibe ist hierbei vorgesehen, daß die Doppelglasscheibe zunächst stufenförmig ausgebildet ist, und alsdann durch eine dreieckförmige Einlage eine entsprechende schräge Stirnfläche erhält. Eine solche schräge Stirnfläche verbindet zwei Vorteile; zum einen wird hierdurch das Herausnehmen der Fensterglasscheibe erleichtert, zum anderen ist aufgrund einer gegenüber einer geraden Stirnfläche vergrößerten Anlagefläche eine bessere Dichtwirkung zu erzielen.

Nach einem weiteren Merkmal der Erfindung ist vorgesehen, daß in der Aussparung für die Fensterglasscheibe ein die Fensterglasscheibe erfassendes Zugelement in Form eines Seiles einliegt, das mit dem einen Spreizglied verbunden ist. Das heißt, daß dann, wenn das Spreizglied herausgenommen wird, auch unmittelbar das Seil mitbeansprucht wird, mit der Folge, daß durch das Seil die Fensterglasscheibe aus dem Fenstereinfaßprofil entfernt werden kann. Das Seil ist hierbei mit der dreieckförmigen Einlage verbunden, insbesondere verklebt. Das Fenstereinfaßprofil weist einen Schlitz zur Durchführung des Seiles bei Herausnahme des Spreizgliedes auf. Vorteilhaft hierbei ist, daß dann, wenn das Spreizglied, das im Querschnitt in etwa keilförmig ausgebildet ist und umlaufend in der ebenfalls umlaufend im Fenstereinfaßprofil angeordneten kanalartigen Öffnung einliegt, mit einer bestimmten Länge aus dieser kanalartigen Öffnung herausgezogen ist, einen hervorragenden Ansatz bietet, um schlußendlich die Kraft aufbringen zu können, die erforderlich ist, um die Fensterglasscheibe aus dem Fenstereinfaßprofil entfernen zu können, wie dies auch oben bereits ansatzweise beschrieben wurde.

Des weiteren kann durch eine derartige schräge Anlagefläche in der Aussparung ein "konturgleiches Fenster" erstellt werden. Unter einem "konturgleichen Fenster" ist ein solches Fenster zu verstehen, bei dem das Fenstereinfaßprofil keine äußeren Dichtlippen mehr ausweist. Allerdings kann mindestens eine umlaufende Dichtlippe auf der nach innen gerichteten Seite, d. h. zum Wageninnern, an dem Fenstereinfaßprofil angeordnet sein. Das heißt, daß die Fensterfläche der Fensterglasscheibe im wesentlichen konturgleich mit dem Fenstereinfaßprofil und der Wandung des Wagens verläuft.

Anhand der Zeichnungen wird die Erfindung nachstehend beispielhaft näher erläutert:
- Fig. 1: zeigt das Notausstiegsfenster in einer Seitenansicht im Schnitt;

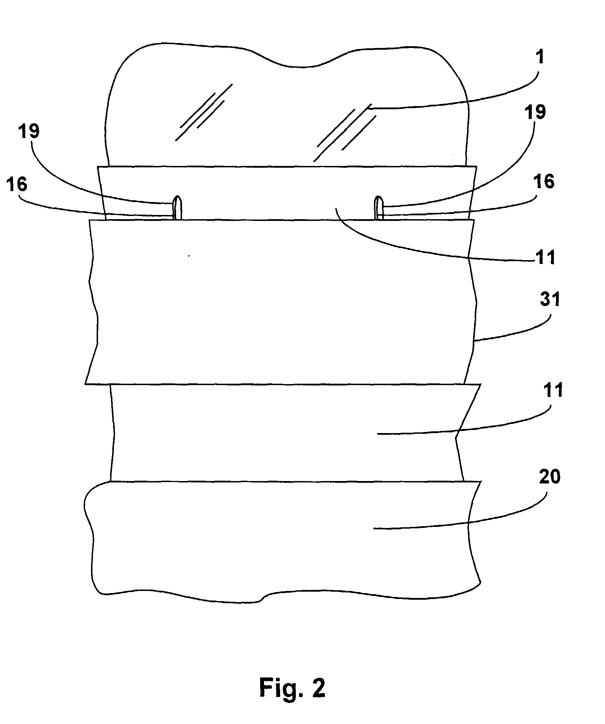

- Fig. 2: zeigt eine Ansicht gemäß der Linie II/II aus Fig. 1;

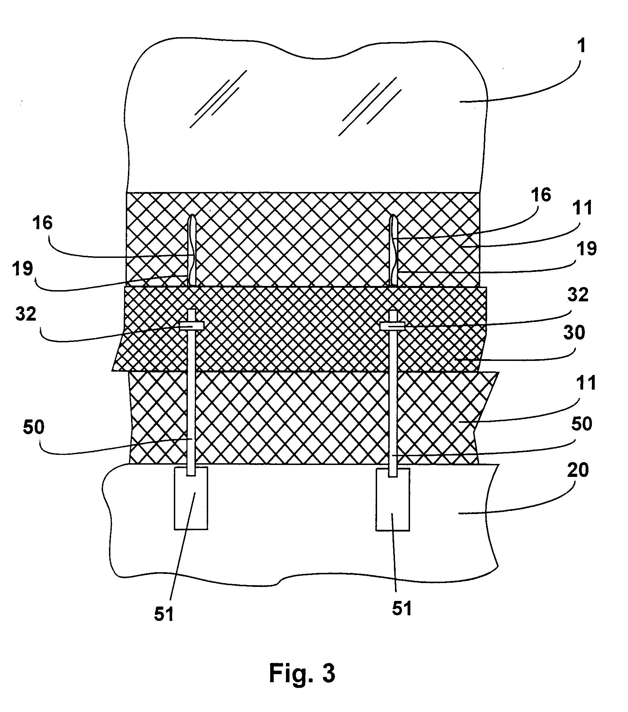

- Fig. 3: zeigt einen Schnitt gemäß der Linie III/III aus Fig. 1;

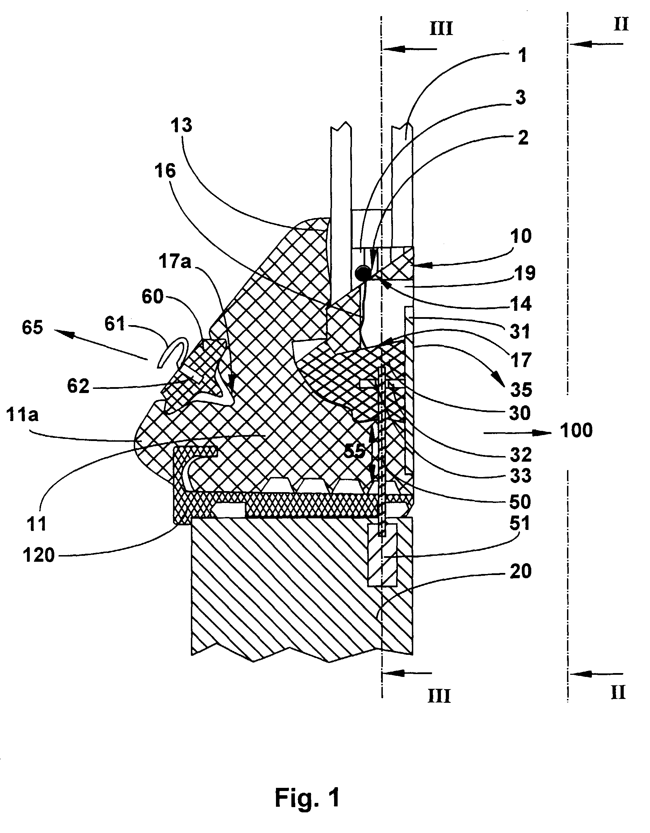

Gemäß der Fig. 1 ist die Fensterglasscheibe mit 1 bezeichnet, das Fenstereinfaßprofil mit 10 und der Wagenkasten mit 20. Die Fensterglasscheibe 1 ist als Doppelfensterglasscheibe ausgebildet, die stirnseitig (Pfeil 2) eine Schräge aufweist. Da die Fensterglasscheibe 1 selbst nicht schräg abgeschnitten werden kann, ist diese stufig ausgebildet, wobei zur Ausbildung der Schräge ein keilförmiges Element 3 in die Stufe eingelegt ist.

Das Fenstereinfaßprofil 10 besteht im wesentlichen aus dem Gummikörper 11 mit der Dichtlippe 13, die an der Fensterglasscheibe 1 wageninnenseitig anliegt. Das Fenstereinfaßprofil 10 als Gummikörper 11 weist im Bereich der Dichtlippe eine Aussparung 14 auf, wobei der Grund der Aussparung 14 entsprechend der Ausbildung der Stirnseite der Fensterglasscheibe 1 ebenfalls schräg ausgebildet ist. Im Bereich des Grundes der Aussparung 14 befindet sich nun das Seil 16, das die Stirnseite der Fensterglasscheibe 1 erfaßt und das mit dem Spreizglied 30 in Verbindung steht. Die Verbindung des Seiles 16 mit der Stirnseite der Fensterglasscheibe 1 erfolgt dadurch, daß das Seil 16 mit dem im Querschnitt keilförmigen oder dreieckförmigen Element 3 verklebt ist.

Das Spreizglied 30 liegt in der kanalartigen Nut 17 des Fenstereinfaßprofiles 11 ein. Das Spreizglied 30 besitzt das griffartige Element 31, wobei an dem griffartigen Element 31 ein Steg 32 angeordnet ist, der in dem Spreizglied 30 selbst verankert ist. Der Steg 32 besitzt eine Bohrung 33, in die ein Stift 50 eingreift, der Bestandteil, beispielsweise eines Magnetschalters 51 ist, und der entlang des Pfeiles 55 verschieblich ist, um so das griffartige Element bei Bedarf, d. h. im Falle des Unfalles, freizugeben. Nach Freigabe des griffartigen Elementes 31 wird dieses griffartige Element, das sich beispielsweise als Platte darstellt, die plan auf dem Fenstereinfaßprofilkörper aufliegt, durch die Finger hintergriffen, und entsprechend dem Pfeil 35 verschwenkt, wobei in Folge dieser Bewegung auch das Spreizglied 30 mit aus der kanalartigen Öffnung herausgezogen wird. Wie bereits an anderer Stelle erläutert, kann dann das umlaufende Spreizglied selbst erfaßt werden, und weiter aus der kanalartigen Öffnung herausgezogen werden, wobei, wie bereits mitgeteilt, hierbei durch das Zugelement und das Seil 16 die Fensterglasscheibe gleichzeitig aus der Aussparung herausgezogen wird. Hierbei wird das Seil 16 in einen im Profilkörper angeordneten Schlitz 19 geführt, wobei der Schlitz 19 bis nach außen durch den Profilkörper hindurchragt.

Auf der gegenüberliegenden Seite des einen ersten Spreizgliedes 30 befindet sich das weitere, zweite Spreizglied 60, das ebenfalls in einer kanalartigen Öffnung oder Nut 17a angeordnet ist. Unterhalb dieses Spreizgliedes 60 befindet sich das hakenförmige Ende der hakenförmigen Verankerung 120, die das Fenstereinfaßprofil 10 erfaßt. Diese hakenförmige Verankerung 120 ist in der Fensteraussparung des Wagenkastens angeordnet. Das Spreizglied 60 besitzt ganz ähnlich wie das Spreizglied 30 ein griffartiges Element 61, das plan auf dem Fenstereinfaßprofil 10 aufliegt. Das griffartige Element 61 ist durch einen Steg 62 mit dem Spreizglied 60 verbunden, so daß beim Herausziehen des griffartigen Elementes in Richtung des Pfeiles 65 das Spreizglied 60 aus der kanalartigen Öffnung 17a herausgezogen werden kann. Durch Herausnahme des Spreizgliedes 60 wird das hakenförmige Ende dieser Fenstereinfaßprofilverankerung 120 durch die Nase 11a des Gummikörpers 11 freigegeben, so daß die Fensterglasscheibe 1 zusammen mit dem Einfaßprofil 10 vollständig aus der umgebenden Wandung des Wagenkastens in Richtung des Pfeiles 100 entfernt werden kann.

## Patentansprüche

1. Notausstiegsfenster eines Fahrzeuges mit einer Fensterglasscheibe (1) und einem Fenstereinfaßprofil (10), wobei das Fenstereinfaßprofil (10) durch den Fensterausschnitt in der Wandung (20) des Fahrzeuges gehalten ist, wobei das Fenstereinfaßprofil (10) eine Aussparung (14) zur Aufnahme der Fensterglasscheibe (1) aufweist, wobei das Fenstereinfaßprofil (10) beabstandet zur Stirnseite der Fensterglasscheibe (1) eine Öffnung (17) zur lösbaren Aufnahme eines ersten Spreizgliedes (30) aufweist, wobei dem Spreizglied (30) gegenüberliegend in dem Fenstereinfaßprofil (10) ein zweites, weiteres Spreizglied (60) angeordnet ist,
**dadurch gekennzeichnet**,
daß der Fensterausschnitt des Fahrzeuges eine hakenförmige Fenster-einfaßprofilverankerung (120) aufweist, wobei das hakenförmige Ende der Verankerung (120) in das Fenstereinfaßprofil (10) eingreift, und wobei das hakenförmige Ende der Verankerung (120) im Einbauzustand vertikal beabstandet zu dem zweiten Spreizglied (60) in dem Fenstereinfaßprofil (10) einliegt.

2. Notausstiegsfenster nach Anspruch 1,
**dadurch gekennzeichnet**,
daß das Spreizglied (30) umlaufend in der ebenfalls umlaufend im Fenstereinfaßprofil (10) angeordneten kanalartigen Öffnung (17) einliegt.

3. Notausstiegsfenster nach Anspruch 1,
**dadurch gekennzeichnet**,
daß das zweite Spreizglied (60) umlaufend in einer ebenfalls umlaufend in dem Fenstereinfaßprofil (10) angeordneten kanalartigen Öffnung (17a) lösbar einliegt.

4. Notausstiegsfenster nach Anspruch 1,
**dadurch gekennzeichnet**,
daß mindestens das eine Spreizglied (30, 60) ein griffartiges Element (31, 61) aufweist.

5. Notausstiegsfenster nach Anspruch 4,
**dadurch gekennzeichnet**,
daß das griffartige Element (31) ausklappbar ist.

6. Notausstiegsfenster nach Anspruch 4,
**dadurch gekennzeichnet**,
daß das mindestens eine griffartige Element (31, 61) durch eine Verriegelung gesichert ist.

7. Notausstiegsfenster nach Anspruch 1,
**dadurch gekennzeichnet**,
daß der Grund der Aussparung (14) schräg verlaufend zur Außenseite des Fahrzeuges zur Mitte der Fensterglasscheibe (1) hin ansteigend ausgebildet ist.

8. Notausstiegsfenster nach Anspruch 7,
**dadurch gekennzeichnet**,
daß die Fensterglasscheibe (1) eine korrespondierende schräge Stirnfläche (Pfeil 2) aufweist.

9. Notausstiegsfenster nach Anspruch 1,
**dadurch gekennzeichnet**,
daß bei Fensterglasscheibe (1) durch ein Seil (16) mit dem Spreizglied (30) verbunden ist, wobei das Fenstereinfaßprofil (10) einen Schlitz (19) für das Seil (16) aufweist.

10. Notausstiegsfenster nach Anspruch 9,
**dadurch gekennzeichnet**,
faß das Seil (16) mit der Fensterglasscheibe (1) verklebt ist.

11. Notausstiegsfenster nach Anspruch 1,
**dadurch gekennzeichnet**,
daß die Fensterglasscheibe (1) als Doppelglasscheibe ausgebildet ist.

12. Notausstiegsfenster nach Anspruch 1,
**dadurch gekennzeichnet**,
daß die Außenfensterfläche der Fensterglasscheibe (1) im wesentlichen konturgleich mit dem Fenstereinfaßprofil und der Wandung des Wagens ist.

13. Notausstiegsfenster nach Anspruch 1,
**dadurch gekennzeichnet**,
daß das Fenstereinfaßprofil (10) zu mindestens einer Seite der Fensterglasscheibe (1) mindestens eine umlaufende Dichtlippe (13) aufweist.
